# EUROPÄISCHE PATENTSCHRIFT

(11) **EP 0 586 423 B1**
(45) Veröffentlichungstag und Bekanntmachung des Hinweises auf die Patenterteilung: **16.08.1995**
(21) Anmeldenummer: 92910074.1
(22) Anmeldetag: 15.05.1992
(51) Int. Cl.: B23B 51/04

(54) **BOHRWERKZEUG**
DRILLING TOOL
OUTIL DE PERCAGE

(30) Priorität: 22.05.1991 DE 4116615; 28.10.1991 DE 4135498
(43) Veröffentlichungstag der Anmeldung: 16.03.1994
(73) Patentinhaber: KOMET Präzisionswerkzeuge Robert Breuning GmbH, D-74354 Besigheim (DE)
(72) Erfinder: SCHEER, Gerhard, D-7121 Löchgau (DE); PERTHEN, Rainer, D-7122 Besigheim (DE)
(74) Vertreter: Wolf, Eckhard, Dr.-Ing.
(86) Internationale Anmeldenummer: EP9201070
(87) Internationale Veröffentlichungsnummer: WO9220483

(56) Entgegenhaltungen:
- DE-A- 3 234 238
- FR-A- 915 668
- FR-A- 1 224 211
- FR-A- 2 143 174
- US-A- 3 942 905
- US-A- 4 248 555
- VDI ZEITSCHRIFT. Bd. 132, Nr. 4, August 1990, DUSSELDORF DE Seiten 38 - 40;KRENZER: 'WENDEPLATTENBOHRER FÜR GROSSE BOHRTIEFEN'

## Beschreibung

Die Erfindung betrifft ein Bohrwerkzeug für Werkzeugmaschinen mit einem mindestens eine Spannut aufweisenden Schaft, einer stirnseitig am Schaft vorzugsweise abnehmbar angeordneten, mindestens zwei Stege mit teilzylindrischen Umfangsflächen und eine entsprechende Anzahl an die Stege angrenzende, im wesentlichen achsparallel ausgerichtete, rückwärtig in die zugehörige Spannut mündende Spankanäle aufweisenden Bohrkrone und mindestens zwei in radialem Abstand von der Schaftachse mit einander zunächst teilweise radial überdeckenden Arbeitsbereichen in je einer Aussparung der Stege im Bereich der Spankanäle angeordneten, jeweils mindestens eine stirnseitig über die Bohrkrone überstehende wirksame Schneidkante aufweisenden Schneidplatten, wobei die Schneidkante der radial äußersten Schneidplatte die teilzylindrischen Umfangsflächen radial übergreift.

Es ist ein Bohrwerkzeug dieser Art bekannt (AT-B-383070), bei welchem durch eine spezielle Ausrichtung der einander im Wirkungsbereich ihrer Schneidkanten teilweise überdeckenden Schneidplatten dafür gesorgt wird, daß die beim Bohrvorgang an den Schneidkanten auftretenden Querkräfte im wesentlichen gegeneinander aufgehoben werden, so daß damit Bohrungen führungsfrei in eine Werkstück eingebracht werden können. Probleme treten jedoch auf, wenn beim Durchbohren eines Werkstücks oder eines Plattenstapels die Selbstzentrierung durch die Schneidplatten entfällt und das Werkzeug mit den Umfangsflächen der Bohrkrone gegen den Bohrungsrand anschlägt. Dabei kann es vor allem bei großen Bohrtiefen über 4 X D (D = Bohrdurchmesser) zu Beschädigungen am Werkstück oder am Bohrwerkzeug kommen.

Ausgehend hiervon liegt der Erfindung die Aufgabe zugrunde, das Bohrwerkzeug der eingangs angegebenen Art dahingehend zu verbessern, daß damit auch Durchbohrungen bei großer Bohrtiefe möglich sind.

Zur Lösung dieser Aufgabe wird gemäß der Erfindung bei einem Bohrwerkzeug der oben genannten Art vorgeschlagen, daß im Bereich der teilzylindrischen Umfangsflächen in axialem Abstand von der Bohrkronenstirnfläche mindestens zwei um ein geringeres Maß als die Schneidkante der radial äußersten Schneidplatte radial überstehende Führungselemente angeordnet sind, die einen Winkelabstand ungleich 180° aufweisen. Die Führungselemente können zweckmäßigerweise einen axialen Abstand voneinander aufweisen. Vorteilhafterweise weist die Bohrkrone zwei einander diametral gegenüberliegende Spankanäle bzw. Stege auf, während die Schneidplatten einzeln oder paarweise einen Winkelabstand von etwa 180° voneinander aufweisen.

Die Führungselemente sorgen dafür, daß das Werkzeug beim Durchbohren innerhalb der Bohrung an der Bohrungswand geführt wird, ohne daß die Umfangsflächen der Bohrkrone gegen den äußeren Bohrungsrand anschlagen. Beim Durchbohren von Werkstücken mit schräger Hinterfläche tritt zusätzlich das Problem auf, daß der Bohrer zunächst auf einer Seite aus der Bohrung austritt, während er über dem gegenüberliegenden Umfangsteil noch in der Bohrung geführt wird. Die Schräge kann dabei so groß sein, daß die Führungselemente der Bohrkrone bereits über die früheste Austrittsstelle übertreten, bevor das Werkstück vollständig durchgebohrt ist. Dadurch wird der Bohrer abgedrängt und schlägt mit seinem Schaft gegen die Bohrungswand im Bereich der frühesten Austrittsstelle an. Dabei besteht die Gefahr, daß die noch im Eingriff befindlichen Schneidplatten zerstört werden. Außerdem kommt es zu einer nicht vollständigen Ausführung der Bohrung und zu einer Zerstörung der Bohrungswand im Bereich der Austrittsstelle. Um diesen Nachteil zu vermeiden, wird gemäß einer bevorzugten Ausgestaltung der Erfindung vorgeschlagen, daß im axialen Abstand von dem Führungselement oder einem der Führungselemente ein weiteres Führungselement im Bereich der teilzylindrischen Umfangsflächen angeordnet ist und daß die einander axial benachbarten Führungselemente paarweise einen Winkelabstand ungleich 180°, vorzugsweise von 120 bis 170°, voneinander aufweisen. Die Führungselemente können dabei auch an den teilzylindrischen Umfangsflächen des Bohrerschafts angeordnet sein, wenn die Schräge der zu durchbohrenden Hinterfläche dies erfordert. Entsprechendes gilt auch für einstückige Bohrer, bei denen die Bohrkrone und der Bohrerschaft einstückig miteinander verbunden sind.

Vorteilhafterweise wird der gegenseitige Winkelabstand zwischen den beiden Führungselementen zwischen 120 und 170°, vorzugsweise 140° gewählt. Dadurch wird vermieden, daß sich die Bohrkrone mit ihren Führungselementen beim Durchbrechen des Werkzeugs in der Bohrung verkeilt. Aus dem gleichen Grund sollten die Führungselemente von den Schneidplatten einen Winkelabstand ungleich 90° und ungleich 180° aufweisen. Vorteilhafterweise ist der Winkelabstand zwischen der äußersten Schneidplatte und dem benachbarten Führungselement größer als der Winkelabstand zwischen der innersten Schneidplatte und dem hierzu benachbarten Führungselement, wobei sich im ersteren Falle ein Winkel von 45 bis 80°, vorzugsweise 65° und im letzteren Falle ein Winkel von 15 bis 45°, vorzugsweise 25°, als optimal erwiesen hat.

Die Führungselemente sind zweckmäßig in unterschiedlichen axialen Abständen von der Stirnfläche der Bohrkrone angeordnet. Die axiale Entzerrung der Führungselemente hat u.a. den Vorteil, daß die Führungselemente nicht gemeinsam sondern nacheinander den Bohrungsrand überschreiten, während die weiter innen liegenden Führungselemente sich noch in der Bohrungswand abstützen. Dadurch ist auch die Gefahr, daß es durch die Führungselemente zu unerwünschten Markierungen in der Nähe der Austrittsstelle der Bohrungswand kommen kann, reduziert. Der axiale Versatz der Führungselemente hat auch einen Vorteil beim Durchbohren von Plattenstapeln, da die Führungselemente nicht gemeinsam sondern nacheinander durch die Trennfugen zwischen den einzelnen Platten eines Plattenstapels hindurchtreten.

Die vorzugsweise aus Hartmetall bestehenden Führungselemente sind an ihrem radial überstehenden Teil vorteilhafterweise ballig, insbesondere als Kugelkalotte ausgebildet, so daß nur eine punktweise Abstützung erfolgt und es auf die Orientierung der Führungselemente beim Anbringen an der Bohrkrone nicht ankommt.

Gemäß einer bevorzugten Ausgestaltung der Erfindung sind die Führungselemente an der Bohrkrone radial verstellbar angeordnet. Dadurch ist einmal mit relativ einfachen Mitteln ein Verschleißausgleich möglich. Zum anderen kann damit eine Anpassung an den radialen Überstand der äußersten Schneidplatte erzielt werden, was insbesondere dann von Vorteil ist, wenn die radial äußerste Schneidplatte an der Bohrkrone radial verstellbar ist. Vorteilhafterweise ist jedes Führungselement durch einen in einer Radialbohrung der Bohrkrone angeordneten, mit seinem balligen Ende radial aus der Radialbohrung herausstehenden Stift gebildet, wobei die Radialbohrung als Gewindebohrung und der Stift als Gewindestift ausgebildet sein kann. Der Stift wird dabei zweckmäßig mit einer Klemmschraube in der Radialbohrung festgeklemmt. Das aus Hartmetell oder Keramik bestehende Führungselement ist vorteilhafterweise an dem über die Radialbohrung überstehenden Ende des Stiftes angelötet oder angeklebt.

Für das Bohren von tiefen Löchern mit einer Tiefe von mehr als 5 X D wird gemäß einer bevorzugten Ausgestaltung der Erfindung vorgeschlagen, daß in der Bohrkrone ein achszentral über deren Stirnseite und den Wirkungsbereich der Schneidplatten überstehender Zentrierbohrer lösbar und axial verstellbar angeordnet ist, wobei der Arbeitsbereich der innersten Schneidplatte radial an denjenigen des Zentrierbohrers heranreicht oder diesen übergreift. Der Zentrierbohrer ist vorteilhafterweise mittels einer Verstellschraube in der Bohrkrone axial verschiebbar und mittels einer Klemmschraube in dieser festklemmbar. Die Zentrierung des Bohrwerkzeugs in der Bohrung wird hierbei bis zum Durchbruch vom Zentrierbohrer übernommen und danach von den Führungselementen.

Gemäß einer weiteren vorteilhaften Ausgestaltung der Erfindung weist die Bohrkrone an ihrem der Stirnseite gegenüberliegenden Ende eine über eine Planfläche überstehende, in eine von einer ebenen Gegenfläche begrenzte Quernut des Schafts einführbare und dort mittels Spannschrauben festklemmbare Querrippe und einen in ein zentrales Paßloch des Schafts einsteckbaren, über die Querrippe achszentral überstehenden, gegebenenfalls durch das rückwärtige Ende des Zentrierbohrers gebildeten Zentrierzapfen auf. Zur Herstellung der Klemmverbindung sind in zwei einander gegenüberliegenden, zur Planfläche senkrechten Begrenzungsflächen der Querrippe konische Vertiefungen in Längsrichtung der Querrippe gegeneinander versetzt angeordnet, in die eine in einer Gewindebohrung des Schafts geführte, durch die Flanken der Quernut hindurchgreifende Schraube mit ihrer konischen Spitze mit einem solchen Achsversatz eindrehbar ist, daß die Bohrkrone und der Schaft an ihren einander zugewandten Planflächen axial gegeneinander gepreßt werden. Dieses Verbindungsprinzip kann allgemein bei Werkzeugen eingesetzt werden, die einen Schaft und einen stirnseitig am Schaft angeordneten, vorzugsweise als Bohrkrone ausgebildeten Schneidenträger aufweisen.

Die Schneidplatten sind vorteilhafterweise als sechseckige Wendeschneidplatten ausgebildet, die mit jeweils zwei wirksamen Schneidkanten über die Stirnfläche der Bohrkrone überstehen. Die radial äußerste Wendeschneidplatte ist gegebenenfalls zusammen mit einer unmittelbar benachbarten, radial weiter innen angeordneten Wendeschneidplatte in einer in der Aussparung des betreffenden Steges radial versetzbaren Kassette angeordnet. Zum Durchbohren von Plattenstapeln ist es zweckmäßig, wenn die beiden wirksamen Schneidkanten jeder Schneidplatte gegenüber der Werkzeugachse radial nach außen geneigt sind. Dabei können die beiden radial äußersten Schneidplatten auf dem gleichen Radius angeordnet sein und die teilzylindrischen Umfangsflächen radial übergreifen. Letzteres ist insbesondere bei kleinen Bohrerdurchmessern der Fall.

Im folgenden wird die Erfindung anhand der in der Zeichnung in schematischer Weise dargestellten Ausführungsbeispiele näher erläutert. Es zeigen
- Fig. 1a und b: eine Seitenansicht von zwei Bohrwerkzeugen mit verschieden langem Schaft und gleicher Bohrkrone;
- Fig. 2: ein Bohrwerkzeug entsprechend Fig. 1a mit kleinerer Bohrkrone;
- Fig. 3a bis c: eine Bohrkrone mit vier Schneidplatten und Zentrierbohrer in einer Seitenansicht, einer Untenansicht und einem Schnitt entlang der Schnittlinie C-C der Fig. 3a;
- Fig. 4a bis c: eine Bohrkrone mit zwei Schneidplatten und Zentrierbohrer in einer Seitenansicht, einer Untenansicht und einem Schnitt entlang der Schnittlinie C-C der Fig. 4c;
- Fig. 5: eine Seitenansicht einer Bohrkrone mit axial durchgreifendem Zentrierbohrer;
- Fig. 6: eine Seitenansicht eines Bohrers zum Durchbohren von Werkstücken mit schräger Hinterfläche.

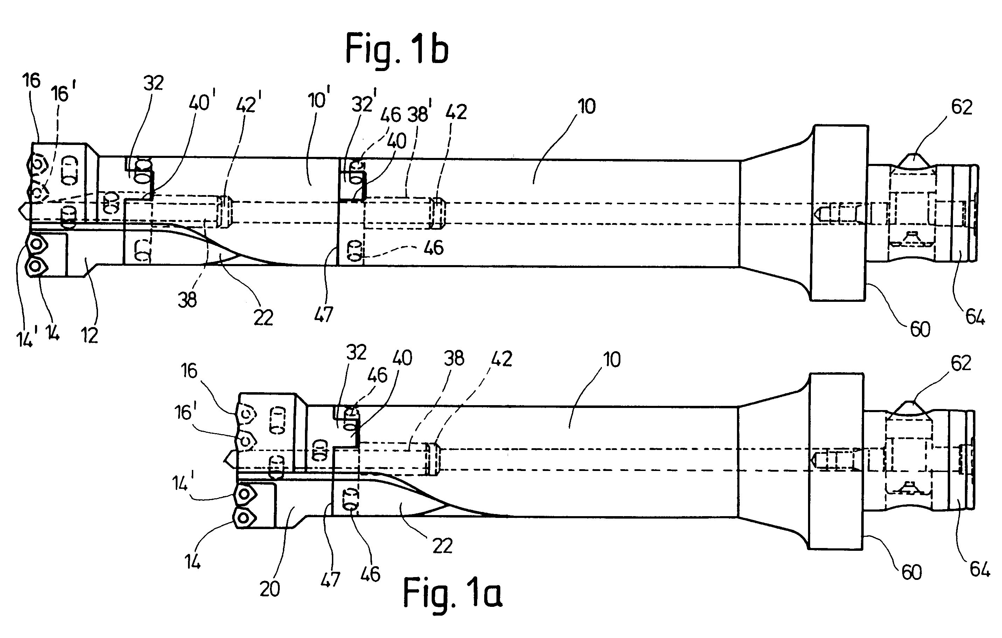

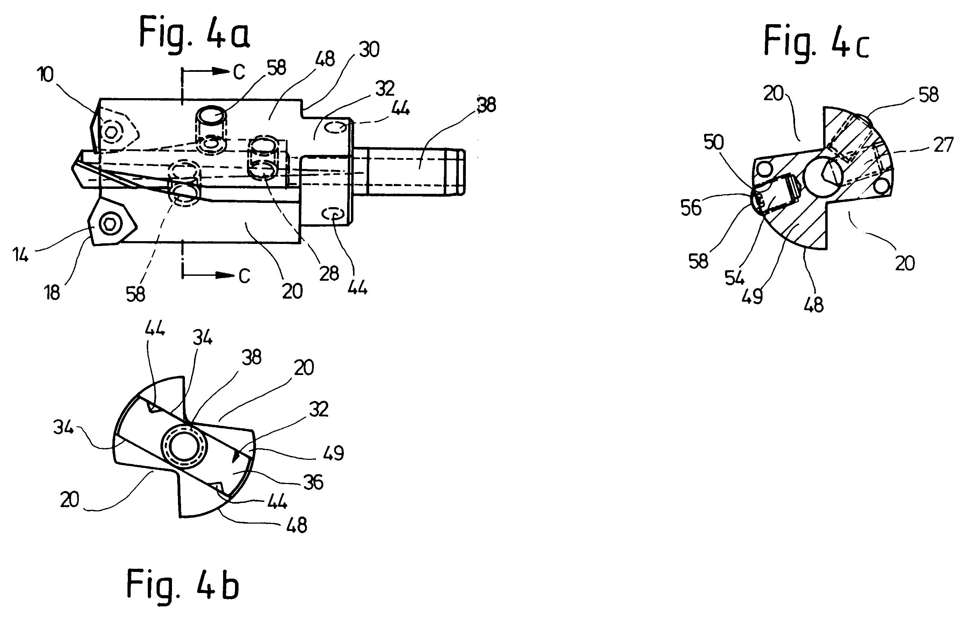

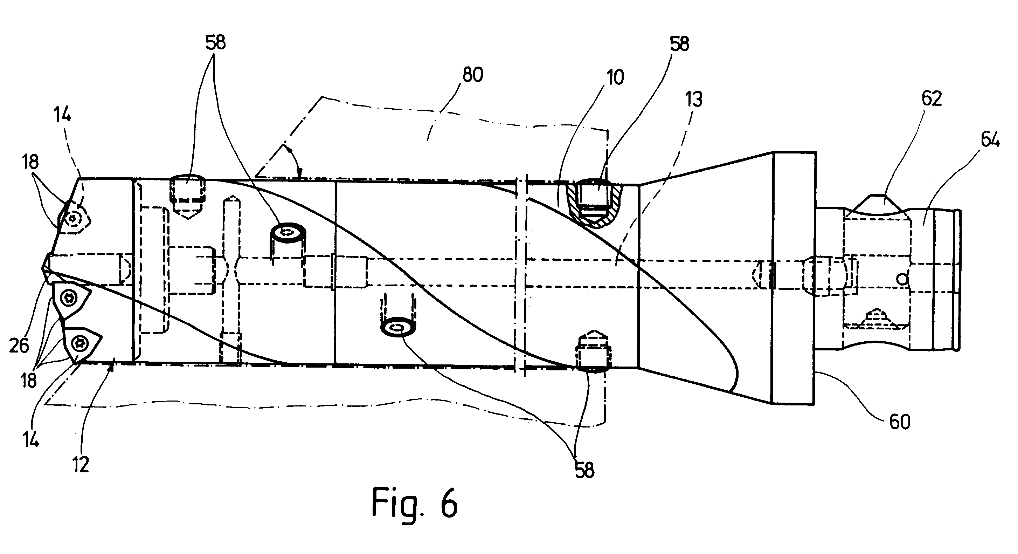

Die in der Zeichnung dargestellten Bohrwerkzeuge bestehen im wesentlichen aus einem Schaft 10 und einer stirnseitig mit dem Schaft 10 form- und kraftschlüssig verbundenen Bohrkrone 12. Die Bohrkrone 12 weist vier (Fig. 1 bis 3), zwei (Fig. 4) bzw. drei (Fig. 6) in verschiedenen radialen Abständen von der Schaftachse 13 angeordnete sechseckige Wendeschneidplatten 14,14',16,16' auf, die mit jeweils zwei einen Spitzenwinkel von 120 bis 160° miteinander einschließenden Schneidkanten 18 stirnseitig über die Bohrkrone 12 überstehen. Die Wendeschneidplatten sind so angeordnet, daß sich ihre wirksamen Schneidkanten in ihren Arbeitsbereichen radial teilweise überdecken. Sie sind jeweils paarweise oder einzeln in Aussparungen 19 einer achsparallelen Flanke eines Spankanals 20 angeordnet, der an seinem rückwärtigen Ende in eine vorzugsweise wendelförmig verlaufende Spannut 22 des Schafts 10 mündet. In einer achszentralen Bohrung 24 der Bohrkrone 12 ist zusätzlich ein Zentrierbohrer 26 mittels einer einen Verstellkonus 27' aufweisenden Verstellschraube 27 axial verstellbar und mittels einer Feststellschraube 28 an der Bohrkrone 12 festlegbar angeordnet, der mit seiner Spitze axial über die Stirnfläche der Bohrkrone 12 und die Schneidkanten 18 der Wendeschneidplatten 14,14', 16,16' übersteht.

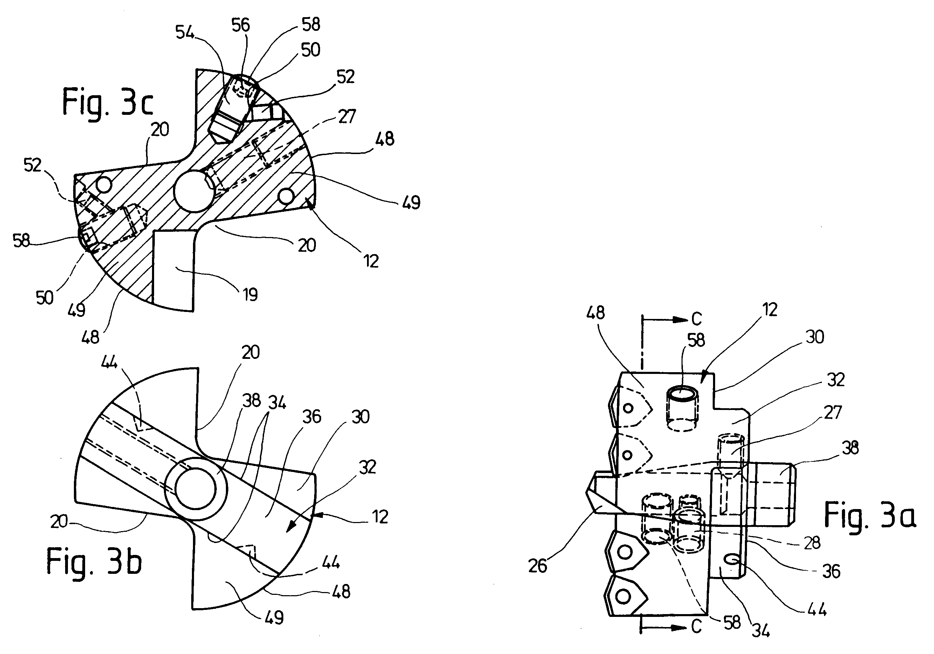

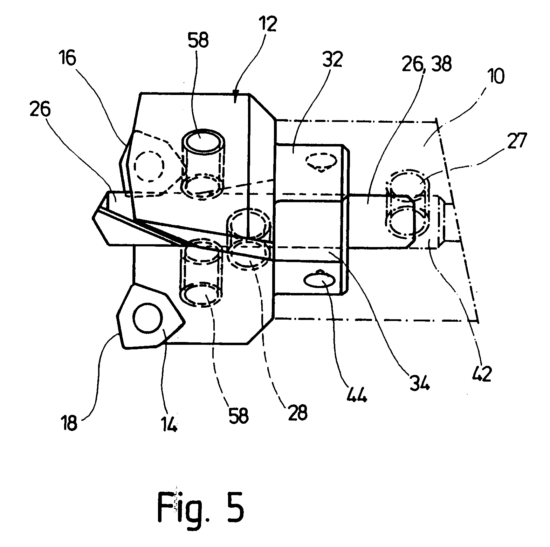

Die Bohrkrone 12 weist rückwärtig eine über eine Planfläche 30 überstehende Querrippe 32 auf, die durch zwei seitliche Planflanken 34 und eine ebene Stirnflanke 36 begrenzt ist und an deren Stirnflanke 36 mittig ein Paßzapfen 38 achszentral übersteht. Der Paßzapfen 38 kann entweder unmittelbar an der Bohrkrone 12 angeordnet oder angeformt sein (Fig. 3a,4a) oder durch das rückwärtige Ende des durch eine Zentralbohrung der Bohrkrone 12 hindurchgreifenden Zentrierbohrers 26 gebildet sein (Fig. 5). Die Querrippe 32 ist in eine entsprechende, stirnseitig am Schaft 10 angeordnete Quernut 40 einsetzbar, während der Paßzapfen 38 in eine achszentrale Paßbohrung 42 des Schafts eingreift. An den Seitenflanken 34 der Querrippe befindet sich je eine konische Vertiefung 44, die in Längsrichtung der Querrippe 32 versetzt gegeneinander angeordnet sind und in die je eine in einer Schraubbohrung 46 des Schafts 10 geführte Schraube mit ihrer konischen Spitze eingreift. Die Achsen der Schraubbohrung 46 und der konischen Vertiefungen 44 sind so versetzt gegeneinander angeordnet, daß die einander zugewandten Planflächen 30,47 der Bohrkrone 12 und des Schafts 10 beim Anziehen der Spannschrauben gegeneinander gepreßt werden. Gleichzeitig wird die Querrippe 32 durch die Spannschrauben innerhalb der Quernut 40 spielfrei gestellt. Wie aus Fig. 1b zu ersehen ist, kann zwischen dem Schaft 10 und der Bohrkrone 12 ein Verlängerungsstück 10' angeordnet werden, das mit einer Querrippe 32' und einem Paßzapfen 38' in der Quernut 40 und der Paßbohrung 42 des Schafts 10 form- und kraftschlüssig verankert ist, und das eine Quernut 40' und eine Paßbohrung 42' zur Aufnahme der Querrippe 32 und des Paßzapfens 38 der Bohrkrone 12 aufweist.

Die Bohrkrone 12 ist durch zwei einander diametral gegenüberliegende Stege 49 mit teilkreisförmigen Umfangsflächen 48 begrenzt, in denen je eine Schraubbohrung 50 zur Aufnahme eines radial verstellbaren und mittels einer Klemmschraube 52 arretierbaren Schraubstifts 54 angeordnet ist. Am radial nach außen weisenden Ende des Schraubstifts 54 ist ein Hartmetallteil 56 angelötet, das mit seinem über die Radialbohrung 50 überstehenden, kugelförmig balligen Ende ein Führungselement 58 bildet. Die Führungselemente 58 sind axial gegenüber der Stirnfläche der Bohrkrone zurückversetzt und weisen einen kleinen axialen Abstand voneinander auf. Ihr gegenseitiger Winkelabstand beträgt im Falle der Fig. 3c 140° und im Falle der Fig. 4c 145°. Die außenliegenden, radial verstellbaren Schneidplatten 14,14' schließen mit dem benachbarten Führungselement 58 einen Winkel von 65° (Fig. 3c) bzw. 70° (Fig. 4c) ein, während die innenliegenden Platten 16,16' mit dem benachbarten Führungselement 58 einen Winkel von 25° (Fig. 3c) bzw. 35° (Fig. 4c) einschließen.

Der in Fig. 6 gezeigte Bohrer eignet sich vor allem zum Durchbohren von Werkstücken 70 mit schräger Hinterfläche, die bei dem gezeigten Ausführungsbeispiel gegenüber der Bohrungsachse einen Winkel von 40° einschließt. Um sicherzustellen, daß der Bohrer beim einseitigen Austritt aus der Werkstückhinterfläche ausreichend abgestützt ist, sind dort weitere, in axialem Abstand voneinander angeordnete Führungselemente 58 an den teilzylindrischen Umfangsflächen auch des Werkzeugschaftes 10 angeordnet. Dadurch wird vermieden, daß der Bohrer beim einseitigen Austreten aus der Bohrung abgedrängt wird und mit seinem Schaft gegen die Bohrungswand im Bereich der frühesten Austrittsstelle anschlägt. Weiter sind bei dem in Fig. 6 gezeigten Ausführungsbeispiel die beiden wirksamen Schneidkanten 18 jeder der drei Schneidplatten 14 gegenüber der Werkzeugachse radial nach außen geneigt. Aufgrund dieser Anordnung der Schneidplatten eignet sich dieser Bohrer auch zum Durchbohren von Plattenstapeln.

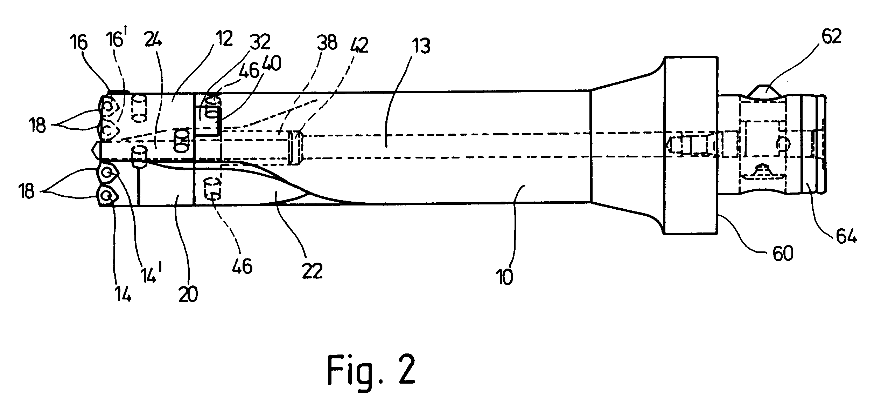

Wie ein Vergleich zwischen Fig. 1 und Fig. 2 zeigt, kann der gleiche Schaft 10 mit Bohrkronen 12 unterschiedlichen Durchmessers bestückt werden. An seinem der Bohrkrone gegenüberliegenden rückwärtigen Ende trägt der Schaft 10 einen axial über eine Ringfläche 60 überstehenden, mit einem verschiebbaren Querbolzen 62 versehenen Paßzapfen 64 für den Anschluß an eine mit einer entsprechenden Aufnahme versehene, nicht dargestellte Maschinenspindel.

Zusammenfassend ist folgendes festzustellen: Die Erfindung bezieht sich auf ein Bohrwerkzeug mit einer Stirnseitig an einem Schaft 10 abnehmbar angeordneten, zwei durch Spankanäle 20 voneinander getrennte Stege mit teilzylindrischen Umfangsflächen 48 aufweisenden Bohrkrone 12, mindestens zwei an den Stegen der Bohrkrone einen Winkelabstand von ca. 180° voneinander aufweisenden Schneidplatten 14,14',16,16' und einem in der Bohrkrone achszentral angeordneten, über deren Stirnfläche überstehenden Zentrierbohrer 26. Die Schneidkante 18 der radial äußersten Schneidplatte 14 steht radial über Umfangsflächen 48 der Bohrkrone 18 über, während der Arbeitsbereich der innersten Schneidplatte radial an denjenigen des Zentrierbohrers 26 heranreicht oder diesen übergreift. Um mit einem derartigen Bohrwerkzeug eine Durchgangsbohrung ohne Beschädigungsgefahr auch bei tiefen Bohrungen vornehmen zu können, ist an den beiden Umfangsflächen 48 in axialem Abstand von der Bohrkronenstirnfläche und in einem gegenseitigen Winkelabstand ungleich 180° je ein um ein geringeres Maß als die Schneidkante 18 der radial äußersten Schneidplatte 14 radial überstehendes Führungselement 58 angeordnet.

## Patentansprüche

1. Bohrwerkzeug für Werkzeugmaschinen mit einem mindestens eine Spannut (22) aufweisenden Schaft (10), einer stirnseitig am Schaft (10) vorzugsweise abnehmbar angeordneten, mindestens zwei Stege mit teilzylindrischen Umfangsflächen (48) und eine entsprechende Anzahl an die Stege angrenzende, im wesentlichen achsparallel ausgerichtete, rückwärtig in die zugehörige Spannut (22) mündende Spankanäle (20) aufweisenden Bohrkrone (12) und mindestens zwei in radialem Abstand von der Schaftachse (13) mit einander zumindest teilweise radial überdeckenden Arbeitsbereichen in je einer Aussparung der Stege im Bereich der Spankanäle (20) angeordneten, jeweils mindestens eine stirnseitig über die Bohrkrone (12) überstehende wirksame Schneidkante (18) aufweisenden Schneidplatten (14,14',16,16'), wobei die Schneidkante (18) der radial äußersten Schneidplatte (14) die teilzylindrischen Umfangsflächen (48) radial übergreift, **dadurch gekennzeichnet**, daß im Bereich der teilzylindrischen Umfangsflächen (48) in axialem Abstand von der Bohrkronenstirnfläche mindestens zwei um ein geringeres Maß als die Schneidkante (18) der radial äußersten Schneidplatte (14) radial überstehende Führungselemente (58) angeordnet sind, die einen Winkelabstand ungleich 180° voneinander aufweisen.

2. Bohrwerkzeug nach Anspruch 1, **dadurch gekennzeichnet**, daß die Führungselemente einen Winkelabstand von 120° bis 170° voneinander aufweisen.

3. Bohrwerkzeug nach Anspruch 1, **dadurch gekennzeichnet**, daß die Führungselemente (58) einen axialen Abstand voneinander aufweisen.

4. Bohrwerkzeug nach Anspruch 1 oder 2, **dadurch gekennzeichnet**, daß im axialen Abstand von einem der Führungselemente (58) ein weiteres Führungselement (58) im Bereich der teilzylindrischen Umfangsflächen angeordnet ist, und daß die einander axial benachbarten Führungselemente paarweise einen Winkelabstand ungleich 180°, vorzugsweise von 120° bis 170° voneinander aufweisen.

5. Bohrwerkzeug nach einem der Ansprüche 1 bis 4, **dadurch gekennzeichnet**, daß die Führungselemente (58) an ihrem radial überstehenden Teil ballig sind, vorzugsweise die Gestalt einer Kugelkalotte aufweisen.

6. Bohrwerkzeug nach einem der Ansprüche 1 bis 5, **dadurch gekennzeichnet**, daß die Führungselemente (58) radial verstellbar angeordnet sind.

7. Bohrwerkzeug nach einem der Ansprüche 1 bis 6, **dadurch gekennzeichnet**, daß zumindest die radial äußerste Schneidplatte (18) an der Bohrkrone (12) radial verstellbar angeordnet ist.

8. Bohrwerkzeug nach einem der Ansprüche 1 bis 7, **dadurch gekennzeichnet**, daß jedes Führungselement (58) durch einen in einer Radialbohrung (50) der Bohrkrone (12) angeordneten, mit seinem vorzugsweise balligen Ende radial aus der Radialbohrung (50) hervorstehenden Stift (54) gebildet ist.

9. Bohrwerkzeug nach Anspruch 8, **dadurch gekennzeichnet**, daß die Radialbohrung (50) als Gewindebohrung und der Stift (54) als Gewindestift ausgebildet ist.

10. Bohrwerkzeug nach Anspruch 8 oder 9, **dadurch gekennzeichnet**, daß der Stift (54) mittels einer Klemmschraube (52) in der Radialbohrung (50) festklemmbar ist.

11. Bohrwerkzeug nach einem der Ansprüche 1 bis 10, **dadurch gekennzeichnet**, daß zumindest der über die Bohrkrone (12) radial überstehende Teil (56) der Führungselemente (58) aus Hartmetall oder aus Keramik besteht.

12. Bohrwerkzeug nach einem der Ansprüche 8 bis 11, **dadurch gekennzeichnet**, daß der Stift (54) an seinem über die Radialbohrung (50) überstehenden Ende ein vorzugsweise angelötetes Hartmetallteil (56) trägt.

13. Bohrwerkzeug nach einem der Ansprüche 1 bis 12, **dadurch gekennzeichnet**, daß die Bohrkrone (12) zwei einander diametral gegenüberliegende Spankanäle bzw. Stege aufweist und daß die Schneidplatten einzeln oder gruppenweise einen Winkelabstand von etwa 180° voneinander aufweisen.

14. Bohrwerkzeug nach einem der Ansprüche 1 bis 13, **dadurch gekennzeichnet**, daß die Führungselemente (58) von den Schneidplatten (14,14',16,16') einen Winkelabstand ungleich 90° und ungleich 180° aufweisen.

15. Bohrwerkzeug nach Anspruch 14, **dadurch gekennzeichnet**, daß die äußerste Schneidplatte (14) und das ihr benachbarte Führungselement (58) in einem Winkelabstand von 45 bis 80° voneinander angeordnet sind.

16. Bohrwerkzeug nach Anspruch 14 oder 15, **dadurch gekennzeichnet**, daß die innerste Schneidplatte und das ihr benachbarte Führungselement in einem Winkelabstand von 15 bis 45° voneinander angeordnet sind.

17. Bohrwerkzeug nach einem der Ansprüche 1 bis 16, **dadurch gekennzeichnet**, daß in der Bohrkrone (12) ein achszentral über deren Stirnseite und über die Schneidkanten (18) der Schneidplatten (14,14', 16,16') überstehender Zentrierbohrer (26) lösbar und axial verstellbar angeordnet ist, und daß der Arbeitsbereich der innersten Schneidplatte (16') radial an denjenigen des Zentrierbohrers (26) heranreicht oder diesen übergreift.

18. Bohrwerkzeug nach Anspruch 17, **dadurch gekennzeichnet**, daß der Zentrierbohrer (26) mittels einer Verstellschraube (27) axial verschiebbar und mittels einer Klemmschraube (28) an der Bohrkrone (12) festklemmbar ist.

19. Bohrwerkzeug nach einem der Ansprüche 1 bis 18, **dadurch gekennzeichnet**, daß die Bohrkrone (12) an ihrem der Stirnseite gegenüberliegenden Ende eine über eine Planfläche (30) überstehende, in eine von einer ebenen Gegenfläche begrenzte Quernut (40) des Schafts (10) einführbare und mittels Spannschrauben festklemmbare Querrippe (32) sowie einen in ein zentrales Paßloch (42) des Schafts (10) einsteckbaren, über die Querrippe (32) achszentral überstehenden Zentrierzapfen (38) aufweist.

20. Werkzeug nach Anspruch 19, **dadurch gekennzeichnet**, daß in zwei einander gegenüberliegenden, zur Planfläche (30) senkrechten Flanken (34) der Querrippe (32) konische Vertiefungen (44) in Längsrichtung der Querrippe (32) gegeneinander versetzt angeordnet sind, in die je eine in einer Gewindebohrung (46) des Schafts (10) geführte, durch die Flanken der Quernut hindurchgreifende Schraube mit einer konischen Spitze mit einem solchen Achsversatz eindrehbar ist, daß der Schneidenträger und der Schaft (10) an ihren Planflächen (30,49) axial gegeneinander gepreßt werden.

21. Bohrwerkzeug nach einem der Ansprüche 1 bis 20, **dadurch gekennzeichnet**, daß die Schneidplatten (14,14',16,16') als sechseckige Wendeschneidplatten ausgebildet sind, die mit jeweils zwei wirksamen Schneidkanten (18) über die Stirnfläche der Bohrkrone (12) überstehen.

22. Bohrwerkzeug nach Anspruch 21, **dadurch gekennzeichnet**, daß die radial äußerste Wendeschneidplatte (14) gegebenenfalls zusammen mit einer unmittelbar benachbarten, radial weiter innenliegenden Wendeschneidplatte (14') in einer in der betreffenden Aussparung (19) radial versetzbaren Kassette angeordnet ist.

23. Bohrwerkzeug nach Anspruch 21 oder 22, **dadurch gekennzeichnet**, daß die beiden wirksamen Schneidkanten (18) jeder Schneidplatte gegenüber der Werkzeugachse radial nach außen geneigt sind.

24. Bohrwerkzeug nach Anspruch 23, **dadurch gekennzeichnet**, daß die beiden radial äußersten Schneidplatten auf dem gleichen Radius angeordnet sind und die teilzylindrischen Umfangsflächen (48) radial übergreifen.

25. Bohrwerkzeug nach einem der Ansprüche 19 bis 24, **dadurch gekennzeichnet**, daß der Zentrierzapfen (38) durch das rückwärtige Ende des durch eine durchgehende Zentralbohrung in der Bohrkrone (12) hindurchgreifenden Zentrierbohrers (26) gebildet ist.

26. Bohrwerkzeug nach einem der Ansprüche 18 bis 25, **dadurch gekennzeichnet,** daß die Verstellschraube (27) einen gegen das rückwärtige Ende des Zentrierbohrers einwirkenden Verstellkonus (27') aufweist.

## Claims

1. A drilling tool for machine tools comprising a shank (10) having at least one chip groove (22), a drilling crown (12) preferably removably arranged on the front face on the shank (10) and having at least two regions with partially cylindrical circumferential surfaces (48) and a corresponding number of chip channels (20) adjoining the regions, being essentially axially parallel aligned and ending rearwardly into the associated chip groove (22), and at least two cutting plates (14, 14', 16, 16'), which are arranged at a radial distance from the shank axis (13) with work areas at least partially radially overlapping one another in each one recess of the regions in the area of the chip channels (20) and which have each at least one active cutting edge (18) projecting at the front face over the drilling crown (12) with the cutting edge (18) of the radially outermost cutting plate (14) radially extending over the partially cylindrical circumferential surfaces (48), characterized in that in the area of the partially cylindrical circumferential surfaces (48) at an axial distance from the drilling crown front face there are arranged at least two guide elements (58) radially projecting slightly less than the cutting edge (18) of the radially outermost cutting plate (14), which guide elements are spaced from one another at an angular distance differing from 180°.

2. The drilling tool according to Claim 1, characterized in that the guide elements are spaced from one another at an angular distance of 120° to 170°.

3. The drilling tool according to Claim 1, characterized in that the guide elements (58) are axially spaced from one another.

4. The drilling tool according to Claim 1 or 2, characterized in that a further guide element (58) is arranged at an axial distance from one of the guide elements (58) in the area of the partially cylindrical circumferential surfaces, and that the axially adjacent guide elements are spaced from one another in pairs at an angular distance differing from 180°, and preferably in the range of 120° to 170°.

5. The drilling tool according to one of the Claims 1 to 4, characterized in that the guide elements (58) are ball-like at their radially projecting part, preferably having the shape of a spherical segment.

6. The drilling tool according to one of the Claims 1 to 5, characterized in that the guide elements (58) are arranged radially adjustably.

7. The drilling tool according to one of the Claims 1 to 6, characterized in that at least the radially outermost cutting plate (18) is arranged radially adjustably on the drilling crown (12).

8. The drilling tool according to one of the Claims 1 to 7, characterized in that each guide element (58) is formed by a pin (54) arranged in the radial bore (50) of the drilling crown (12) and projecting with its preferably ball-like end radially from the radial bore (50).

9. The drilling tool according to Claim 8, characterized in that the radial bore (50) is constructed as a taphole and the pin (54) as a threaded pin.

10. The drilling tool according to Claim 8 or 9, characterized in that the pin (54) can be clamped in the radial bore (50) by means of a clamping screw (52).

11. The drilling tool according to one of the Claims 1 to 10, characterized in that at least the part (56) of the guide elements (58) which projects radially over the drilling crown (12) consists of a hard-metal or of ceramics.

12. The drilling tool according to one of the Claims 8 to 11, characterized in that the pin (54) includes at its end projecting over the radial bore (50) a preferably soldered-on hard-metal part (56).

13. The drilling tool according to one of the Claims 1 to 12, characterized in that the drilling crown (12) has two diametrically opposite chip channels or regions, and that the cutting plates are spaced from one another individually or in groups at an angular distance of approximately 180°.

14. The drilling tool according to one of the Claims 1 to 13, characterized in that the guide elements (58) are spaced from the cutting plates (14, 14', 16, 16') at an angular distance differing from 90° and differing from 180°.

15. The drilling tool according to Claim 14, characterized in that the outermost cutting plate (14) and the guide element (58) adjacent to it are arranged at an angular distance of 45° to 80° from one another.

16. The drilling tool according to Claim 14 or 15, characterized in that the innermost cutting plate and the guide element adjacent to it are arranged at an angular distance of 15° to 45° from one another.

17. The drilling tool according to one of the Claims 1 to 16, characterized in that a centering drill (26) projects axially centrally over the front face of the drilling crown and over the cutting edges (18) of the cutting plates (14, 14', 16, 16') and is arranged releasably and axially adjustably in the drilling crown (12), and that the working area of the innermost cutting plate (16') approaches or overlaps radially the work area of the centering drill (26).

18. The drilling tool according to Claim 17, characterized in that the centering drill (26) can be axially moved by means of an adjusting screw (27) and can be clamped on the drilling crown (12) by means of a clamping screw (28).

19. The drilling tool according to one of the Claims 1 to 18, characterized in that the drilling crown (12) has a transverse rib (32) at its end opposite the front face which projects over the plane surface (30) and can be guided into a transverse groove (40) of the shank (10), which transverse groove is limited by a flat countersurface and can be clamped by means of clamping screws, and a centering pin (38) which can be placed into a center mating hole (42) of the shank (10) and projects axially centrally over the transverse rib (32).

20. The tool according to Claim 19, characterized in that conical recesses (44) are arranged offset with respect to one another in longitudinal direction of the transverse rib (32) in two sides (34) of the transverse rib (32), which sides (34) lie opposite to one another and are perpendicular with respect to the plane surface (30), into which recesses each one screw with a conical tip, which screw is guided in a taphole (46) of the shank (10) and extends through the sides of the transverse groove, can be screwed with such an axial shift that the drilling crown and the shank (10) are pressed axially against one another at their plane surface (30, 49).

21. The drilling tool according to one of the Claims 1 to 20, characterized in that the cutting plates (14, 14', 16, 16') are constructed as hexagonal reversing cutting plates which each project with two active cutting edges (18) over the front face of the drilling crown (12).

22. The drilling tool according to Claim 21, characterized in that the radially outermost reversing cutting plate (14), if necessary, together with an immediately adjacent reversing cutting plate (14'), which lies radially inwardly, is arranged in a cassette, which can be radially offset in the respective recess (19).

23. The drilling tool according to Claim 21 or 22, characterized in that the two active cutting edges (18) of each cutting plate are radially outwardly inclined with respect to the tool axis.

24. The drilling tool according to Claim 23, characterized in that the two radially outermost cutting plates are arranged on the same radius and radially extend over the partially cylindrical circumferential surfaces (48).

25. The drilling tool according to one of the Claims 19 to 24, characterized in that the centering pin (38) is formed by the rearward end of the centering drill (26) which extends through a through center bore in the drilling crown (12).

26. The drilling tool according to one of the Claims 18 to 25, characterized in that the adjusting screw (27) has an adjusting cone (27') acting against the rearward end of the centering drill.

## Revendications

1. Outil de perçage pour machines-outils, comprenant une tige (10) avec au moins une rainure à copeaux (22), une couronne de fleuret (12) montée, de préférence de manière amovible, le sur le côté frontal de la tige (10) et présentant au moins deux barrettes avec des surfaces périphériques (48) partiellement cylindriques et un nombre correspondant de canaux à copeaux (20) qui avoisinent les barrettes, sont orientés sensiblement parallèlement à l'axe et débouchent à l'arrière dans la rainure à copeaux (22) associée, et au moins deux plaquettes de coupe (14, 14', 16, 16') disposées, à distance radiale de l'axe (13) de la tige, avec des zones de travail qui se recouvrent au moins partiellement dans le sens radial, dans respectivement un évidement des barrettes, dans la région des canaux à copeaux (20), et présentant à chaque fois au moins une arête de coupe (18) active qui dépasse, du côté frontal, de la couronne de fleuret (12), l'arête de coupe (18) de la plaquette de coupe (14) située radialement le plus à l'extérieur recouvrant radialement les surfaces périphériques (48) partiellement cylindriques, **caractérisé en ce** que dans la région des surfaces périphériques (48) partiellement cylindriques sont prévus, à distance axiale de la surface frontale de la couronne de fleuret, au moins deux éléments de guidage (58) qui dépassent radialement d'une quantité plus faible que l'arête de coupe (18) de la plaquette de coupe (14) située radialement le plus à l'extérieur, et dont l'écartement angulaire est différent de 180°.

2. Outil de perçage selon la revendication 1, caractérisé en ce que les éléments de guidage présentent entre eux une distance angulaire de 120° à 170°.

3. Outil de perçage selon la revendication 1, caractérisé en ce que les éléments de guidage (58) se trouvent à une distance axiale les uns par rapport aux autres.

4. Outil de perçage selon l'une des revendications 1 ou 2, caractérisé en ce que, à distance axiale par rapport à l'un des éléments de guidage (58), un élément de guidage (58) supplémentaire est disposé dans la région des surfaces périphériques partiellement cylindriques, et que les éléments de guidage axialement voisins présentent, par paires, un écartement angulaire différent de 180°, de préférence de 120° à 170°.

5. Outil de perçage selon l'une des revendications 1 à 4, caractérisé en ce que les éléments de guidage (58) présentent sur leur partie radialement en saillie une forme bombée, de préférence la forme d'une calotte sphérique.

6. Outil de perçage selon l'une des revendications 1 à 5, caractérisé en ce que les éléments de guidage (58) sont réglables dans le sens radial.

7. Outil de perçage selon l'une des revendications 1 à 6, caractérisé en ce qu'au moins la plaquette de coupe (18) située radialement le plus à l'extérieur est montée sur la couronne de fleuret (12) de manière à pouvoir être réglée dans le sens radial.

8. Outil de perçage selon l'une des revendications 1 à 7, caractérisé en ce que chaque élément de guidage (58) est constitué par une tige (54) placée dans un alésage radial (50) de la couronne de fleuret (12), dont l'extrémité de préférence bombée dépasse dudit alésage radial (50).

9. Outil de perçage selon la revendication 8, caractérisé en ce que l'alésage radial (50) est conformé en taraudage et que la tige (54) est une tige filetée.

10. Outil de perçage selon l'une des revendications 8 ou 9, caractérisé en ce que la tige (54) peut être bloquée dans l'alésage radial (50) au moyen d'une vis de serrage (52).

11. Outil de perçage selon l'une des revendications 1 à 10, caractérisé en ce qu'au moins la partie (56) des éléments de guidage (58) qui dépasse radialement de la couronne de fleuret (12), est réalisée en métal dur ou en céramique.

12. Outil de perçage selon l'une des revendications 8 à 11, caractérisé en ce que la tige (54) porte à son extrémité dépassant de l'alésage radial (50), un élément en métal dur (56), de préférence soudé.

13. Outil de perçage selon l'une des revendications 1 à 12, caractérisé en ce que la couronne de fleuret (12) présente deux canaux à copeaux et respectivement barrettes diamétralement opposés, et que les plaquettes de coupe sont disposées, individuellement ou par groupes, à des intervalles angulaire d'environ 180°.

14. Outil de perçage selon l'une des revendications 1 à 13, caractérisé en ce que les éléments de guidage (58) sont disposés par rapport aux plaquettes de coupe (14, 14', 16, 16') à une distance angulaire différente de 90° et différente de 180°.

15. Outil de perçage selon la revendication 14, caractérisé en ce que la plaquette de coupe (14) située le plus à l'extérieur et l'élément de guidage (58) qui l'avoisine sont disposés l'un par rapport à l'autre à une distance angulaire de 45 à 80°.

16. Outil de perçage selon l'une des revendications 14 ou 15, caractérisé en ce que la plaquette de coupe située le plus à l'intérieur et l'élément de guidage qui l'avoisine sont disposés l'un par rapport à l'autre à une distance angulaire de 15 à 45°.

17. Outil de perçage selon l'une des revendications 1 à 16, caractérisé en ce qu'un foret de centrage (26) axialement centré et en saillie par rapport à la surface frontale de ladite couronne de fleuret (12) et aux arêtes de coupe (18) des plaquettes de coupe (14, 14', 16, 16'), est monté de manière amovible et axialement mobile dans ladite couronne de fleuret, et que la zone de travail de la plaquette de coupe (16') située le plus à l'intérieur s'étend radialement ou recouvre celle du foret de centrage (26).

18. Outil de perçage selon la revendication 17, caractérisé en ce que le foret de centrage (26) peut être déplacé dans le sens axial au moyen d'une vis de réglage (27) et bloqué sur la couronne de fleuret (12) au moyen d'une vis de serrage (28).

19. Outil de perçage selon l'une des revendications 1 à 18, caractérisé en ce que la couronne de fleuret (12) présente à son extrémité opposée à la surface frontale, une nervure transversale (32) qui dépasse d'une surface plane (30), peut être introduite dans une rainure transversale (40) de la tige (10) délimitée par une surface plane conjuguée, et bloquée au moyen de vis de serrage, ainsi qu'une queue de centrage (38) laquelle peut être engagée dans un alésage d'ajustage (42) central de la tige (10) et dépasse de manière axialement centrée de la nervure transversale (32).

20. Outil de perçage selon la revendication 19, caractérisé en ce que dans deux flancs (34) opposés de la nervure transversale (32), orientés perpendiculairement par rapport à la surface plane (30), sont prévus, dans la direction longitudinale de ladite nervure transversale (32), des creux coniques (44) décalés les uns par rapport aux autres dans lesquels respectivement une vis guidée dans un taraudage (46) de la tige (10) et traversant les flancs de la rainure transversale, peut être vissée avec une pointe conique avec un déport axial tel que le porte-lames et la tige (10) sont axialement pressés l'un contre l'autre avec leurs surfaces planes (30, 49).

21. Outil de perçage selon l'une des revendications 1 à 20, caractérisé en ce que les plaquettes de coupe (14, 14', 16, 16') sont conformées en plaquettes de coupe réversibles hexagonales qui dépassent avec respectivement deux arêtes de coupe (18) actives de la surface frontale de la couronne de fleuret (12).

22. Outil de perçage selon la revendication 21, caractérisé en ce que la plaquette de coupe réversible (14) située radialement le plus à l'extérieur est disposée, éventuellement conjointement avec une plaquette de coupe réversible (14') directement voisine, située radialement plus à l'intérieur, dans une cassette qui peut être déplacée radialement dans l'évidement (19) correspondant.

23. Outil de perçage selon l'une des revendications 21 ou 22, caractérisé en ce que les deux arêtes de coupe (18) actives de chaque plaquette de coupe sont inclinées radialement vers l'extérieur par rapport à l'axe de l'outil.

24. Outil de perçage selon la revendication 23, caractérisé en ce que les deux plaquettes de coupe situées radialement le plus à l'extérieur sont disposées sur le même rayon et recouvrent les surfaces périphériques (48) partiellement cylindriques.

25. Outil de perçage selon l'une des revendications 19 à 24, caractérisé en ce que la queue de centrage (38) est constituée par l'extrémité postérieure du foret de centrage (26) traversant un alésage de centrage continu dans la couronne de fleuret (12).

26. Outil de perçage selon l'une des revendications 18 à 25, caractérisé en ce que la vis de réglage (27) comporte un cône de réglage (27') qui agit sur l'extrémité postérieure du foret de centrage.
